# FASCICULE DE BREVET EUROPEEN

(11) **EP 2 035 193 B1**
(45) Date de publication et mention de la délivrance du brevet: **17.11.2010**
(21) Numéro de dépôt: 07765339.2
(22) Date de dépôt: 07.06.2007
(51) Int. Cl.: B25J 5/00, B25J 9/04, B24B 7/18

(54) **DISPOSITIF POUR LE TRAITEMENT D'UNE SURFACE**
VORRICHTUNG ZUR BEHANDLUNG EINER OBERFLÄCHE
DEVICE FOR TREATING A SURFACE

(30) Priorité: 07.06.2006 FR 0605070
(43) Date de publication de la demande: 18.03.2009
(73) Titulaire: Bouygues Construction, 78280 Guyancourt (FR)
(72) Inventeur: PICQUAND, Jean-Philippe, 78000 Versailles (FR); RICHARD, Philippe, 77700 Serris (FR); HASSELVANDER, Rodolphe, 95600 Eaubonne (FR); LEGRAND, Flavien, 75016 PARIS (FR); DE BROISSIA, Michel, 78180 Montigny Le Bretonneux (FR)
(74) Mandataire: Callon de Lamarck, Jean-Robert
(86) Numéro de dépôt international: PCT/EP2007/055630
(87) Numéro de publication internationale: WO 2007/141320

(56) Documents cités:
- JP-A- 9 085 652
- US-A- 4 706 004
- US-A1- 2005 064 804
- US-B1- 6 189 473

## Description

L'invention concerne un dispositif de traitement de surface.

Ce dispositif est notamment - mais non limitativement - conçu pour le ponçage d'un plafond et, éventuellement, d'un mur ou d'une jonction mur/plafond, en maîtrisant finement le travail effectué et notamment l'épaisseur du matériau retiré.

Une application particulière du dispositif dans le domaine nucléaire est, pour une opération de démantèlement, de poncer sur une épaisseur maîtrisée une surface (plafond, mur) contaminée, en évitant toute émanation de poussière.

Ce traitement de surface est actuellement réalisé manuellement par plusieurs opérateurs humains au moyen de ponceuses à disque munies d'aspirateurs à poussière. L'environnement (zone radioactive) impose que ces opérateurs soient équipés de systèmes de protection exigeant une limitation de la durée d'intervention. Le poids et la conception des outils utilisés rendent cette tâche pénible (bras et tête levés). La hauteur de travail résultante et la diversité des conditions d'appui au sol nécessitent de nombreuses mises en station d'équipements type échafaudage qui diminuent de ce fait la cadence de réalisation.

D'autres applications du dispositif, dans le domaine du bâtiment, sont d'améliorer la planéité de la sous-face d'un plafond en béton, ainsi que de traiter la jonction d'un mur avec un plafond.

Le coulage en place des dalles de plancher de bâtiment fait appel à des systèmes de coffrages manutentionables à la main et de ce fait de taille réduite, conçus pour constituer le plancher avec des panneaux juxtaposés en sorte que la sous-face du plancher qui constitue le plafond du local sous-jacent peut présenter des désaffleures qu'il est nécessaire de traiter avant la réalisation des enduits de plafond.

De la même façon qu'en démantèlement, ce traitement est réalisé au moyen de ponceuses, l'objectif étant de réduire à quelques mm les balèvres existantes, ce qui nécessite quelquefois d'insister longuement sur des « points durs ». Réalisée à l'air libre, et pilotée par un opérateur unique, cette tâche nécessite le port de protections contre les poussières du fait de la production de nombreux effluents qu'il serait souhaitable de contenir. Cette tâche est réalisée en parallèle des cycles de gros oeuvre, et se réalise par logement et pièce par pièce dans des espaces restreints, ponctuellement encombrés et éventuellement en présence d'autres travailleurs. La présence d'équipements de chantiers, tels les étais de séchage, ou d'incorporations second oeuvre demande une capacité d'évitement. La jonction des murs et des planchers (appelée cueillie) est également traitée lors de cette intervention en réalisant une empreinte dans les murs en positionnant la ponceuse de manière verticale.

Dans le cas du ponçage d'un plafond de bâtiment, on a déjà proposé de faciliter la tâche de l'opérateur au moyen d'un dispositif dans lequel un outil de ponçage est placé à l'extrémité d'un bras porté par un support roulant.

Dans ce dispositif connu, l'outil de ponçage est un disque rotatif entraîné en rotation par un moteur et le bras est un simple fléau monté à bascule autour d'un axe horizontal porté par un parallélogramme articulé monté à pivotement sur une colonne qui repose sur une embase roulante. L'extrémité libre du fléau peut être appréhendée par le manipulateur pour élever l'autre extrémité qui porte l'outil de ponçage, par basculement du fléau sur son axe, jusque dans une position où l'outil de ponçage est au contact du plafond.

Il est également prévu de munir le dispositif d'un moyen d'aspiration qui permet de collecter à proximité de l'outil les poussières de ponçage.

Ce dispositif élémentaire permet de se passer d'un échafaudage et soulage l'opérateur qui ne porte plus directement le poids du disque et de son moteur, qui se trouve à l'écart de la zone travaillée et qui est protégé des poussières.

Un tel dispositif n'a aucune capacité de fonctionnement autonome.

On connaît également des dispositifs, non dédiés au traitement de surface, comprenant un bras manipulateur articulé de type SCARA porté par un support déployable qui repose sur une embase mobile, qui permettent de manipuler des charges. Un exemple en ce sens est le robot de la société Komatsu et décrit dans la demande de brevet japonais JP-09085652 qui permet de déplacer et d'amener en position des panneaux de cloison.

Par ailleurs, le document US-A-6 189 473 décrit un dispositif pour le traitement d'une surface qui comprend un bras manipulateur articulé à une extrémité duquel est porté un outil, ce bras étant porté par un support comportant un élévateur déployable qui repose sur une embase mobile, et des moyens de commande pour le déploiement de l'élévateur et le fonctionnement du bras. La présente invention vise à fournir un dispositif constituant un robot de traitement de surface, notamment pour permettre les applications précitées dans des conditions de précision et avec des rendements très améliorés.

Le dispositif selon la présente invention pour le traitement d'une surface telle qu'un plafond ou un mur comprend un bras (9) à une extrémité duquel est porté un outil (11),
- le bras étant porté par un support qui comprend une embase mobile (4),
- le bras (9) étant un bras manipulateur articulé,
- le support comportant un élévateur (6) déployable qui repose sur l'embase mobile,
- l'outil étant monté sur un vérin accouplé à un capteur d'effort,
- des moyens de commande étant prévus pour commander le déploiement de l'élévateur et le fonctionnement du bras afin d'amener l'outil en position, ainsi que pour commander le vérin afin de contrôler l'effort d'application de l'outil sur la surface à traiter.

Avantageusement notamment, les moyens de commande contrôlent en outre la vitesse de déplacement de l'outil le long de la surface à traiter.

Notamment, dans le cas où l'outil est un disque à poncer, les moyens de commande agissent préférentiellement sur le vérin pour maintenir constant l'effort d'application dudit disque à poncer sur la surface à traiter, tandis que la vitesse de déplacement dudit disque à poncer le long de la surface est maintenue constante et que la vitesse de rotation dudit disque à poncer est également maintenue constante.

Dans un mode de réalisation par exemple, le vérin est apte à déplacer le disque parallèlement à son axe de rotation.

Par ailleurs, le bras manipulateur est avantageusement un bras SCARA compliant (actif ou passif).

Les bras manipulateurs de type SCARA (acronyme de SELECTIVE COMPLIANCE ASSEMBLY ROBOT ARM) sont, de façon connue en soi des bras articulés à plusieurs axes de rotation.

La compliance est la faculté d'un robot à réagir en fonction des forces extérieures appliquées sur son outil. Il existe deux types de compliance : la compliance passive et la compliance active.

En compliance passive, on utilise des systèmes mécaniques composés de ressorts, axes et articulations sans interaction entre l'ordinateur de contrôle du robot et le système compliant par lui-même.

La compliance active utilise des capteurs de forces ou/et couples, le plus généralement des capteurs de force/couple à six degrés de liberté pour interagir avec le contrôleur du robot et commander ses mouvements en fonction des retours d'informations fournis par le capteur.

Dans une réalisation préférée, le bras manipulateur comprend un premier bras qui peut pivoter autour d'un axe et un avant-bras qui peut pivoter sur le premier bras autour d'un axe, ces deux axes étant parallèles, l'avant-bras portant à son extrémité libre l'outil de ponçage et des actionneurs étant prévus pour provoquer la rotation du bras et celle de l'avant-bras.

L'outil est de préférence une buse de grenaillage ou un disque rotatif. Dans le premier cas, la buse est alimentée par un dispositif qui de préférence est intégré au robot; dans le second cas, le disque rotatif est entraîné par un moteur électrique qui de préférence est monté à l'extrémité du bras pour entraîner directement le disque.

Dans des solutions préférées, l'axe de rotation du disque de ponçage ou l'axe de projection de la buse est parallèle aux axes de pivotement du bras et de l'avant-bras.

Dans les deux cas, le robot comporte des moyens qui aspirent les poussières résultant du ponçage, à proximité de la buse ou du disque.

Dans une solution préférée, ces moyens additionnels comprennent un vérin qui déplace le disque parallèlement à son axe de rotation.

Un capteur d'effort est avantageusement disposé entre l'avant-bras et l'ensemble constitué par le disque et son moteur d'entraînement pour recueillir des informations sur l'effort de ponçage et permettre en conséquence une commande appropriée dudit vérin.

Avantageusement le robot comporte également des moyens pour corriger l'orientation de l'outil par rapport au plafond lorsque le sol et le plafond ne sont pas parfaitement parallèles.

Dans une solution préférée, relative au cas d'un disque de ponçage, ces moyens comprennent un ensemble constitué de deux plateaux reliés par une structure en treillis comprenant des biellettes. Cet ensemble étant interposé entre le disque de ponçage et son moteur d'entraînement ou entre ce moteur d'entraînement et le bras manipulateur.

La publication FR 2 549 916 décrit un exemple d'un dispositif d'articulation actif utilisable dans un bras de robot constitué de deux plateaux reliés par une structure en treillis, où les billettes sont des vérins.

Dans une solution préférée, pour augmenter la zone de travail potentielle de l'outil de ponçage, le bras manipulateur est monté à translation selon un axe horizontal sur une plate-forme fixée à la partie supérieure de l'élévateur.

De préférence, cette translation est commandée par un système de vis à billes entraîné par un moteur.

Si le robot est destiné aussi bien au ponçage d'un plafond qu'à celui d'un mur ou de la jonction d'un mur et d'un plafond, l'ensemble du bras manipulateur est monté à pivotement sur la plate-forme autour d'un axe horizontal.

De préférence, l'élévateur est monté sur l'embase de façon à pouvoir être pivoté sur lui-même autour d'un axe vertical.

Dans des réalisations préférées, l'élévateur comprend un mât télescopique ou une élévatrice à ciseaux.

Des vérins ou des moteurs électriques commandés actionnent le mât ou l'élévatrice à ciseaux.

L'embase roulante est montée sur roues ou sur chenilles actionnées par un ou des moteurs.

Dans des réalisations préférées, l'embase peut se déplacer de façon autonome.

De préférence, les actionneurs (moteurs ou vérins) qui provoquent les mouvements du robot (déplacement de l'embase, rotation de l'élévatrice, translation verticale de l'élévatrice, translation horizontale du bras et rotations du bras) sont électriques et alimentés par des accus portés par le robot ou par une source d'énergie indépendante.

On décrira ci-après un exemple de réalisation préférée d'un robot de ponçage conforme à la présente invention, en référence aux figures du dessin joint, la description et les figures faisant apparaître les caractéristiques précitées et d'autres caractéristiques de la présente invention :
- la figure 1 est un schéma de principe, en élévation, d'un local contaminé dont le plafond doit être poncé ;
- la figure 2 est un schéma d'ensemble, en perspective, du robot selon l'invention ;
- la figure 3 est un schéma du montage de l'outil de ponçage sur le bras manipulateur ;
- la figure 4 est une perspective d'un capteur d'efforts ;
- la figure 5 est une vue de principe de la cinématique du bras manipulateur ;
- la figure 6 est une vue en perspective du bras manipulateur ;
- la figure 7 est une vue de principe d'un dispositif d'embrayage monté sur l'articulation de l'avant-bras sur le bras ;
- la figure 8 est un schéma d'une architecture de commande des actuateurs du robot ;

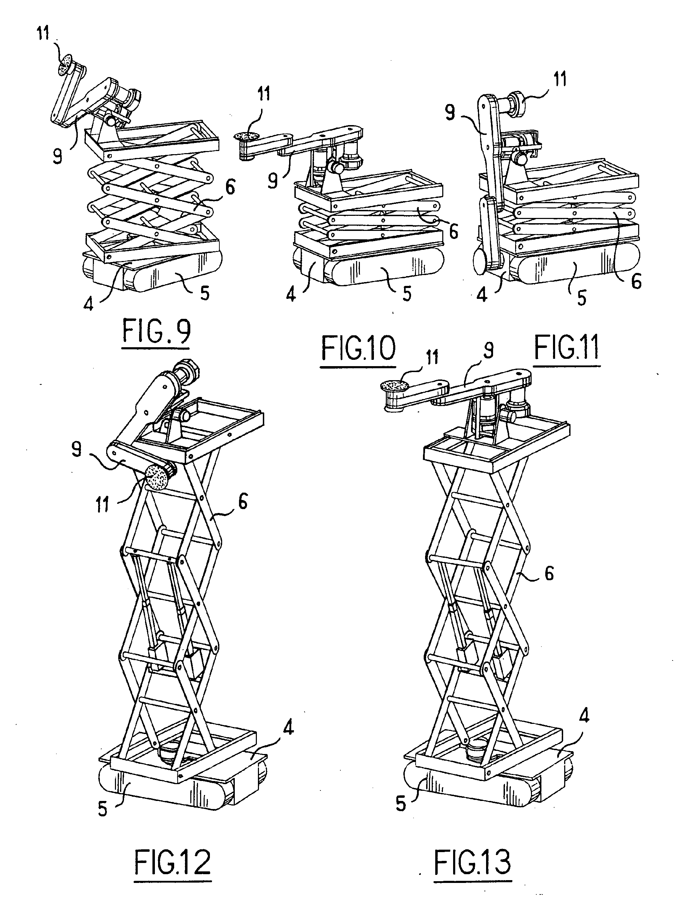

- les figures 9 à 13 et les figures 17A à 17C représentent diverses configurations du robot ;
- la figure 14 est un exemple d'un parcours de travail assigné à la ponceuse ;
- la figure 15 est une représentation en perspective schématique illustrant un autre montage possible pour l'outil de traitement de surface sur le bras manipulateur ;
- la figure 16 illustre un autre mode de réalisation possible pour l'élévateur du robot ;
- les figures 17A à 17C illustrent différentes configurations possibles pour le robot avec le mât élévateur de la figure 16 ;
- la figure 18 illustre les stabilisateurs utilisés avec l'élévateur de la figure 16 ;
- les figures 19 et 20 sont des représentations schématiques en perspective illustrant différentes positions possibles du bras SCARA.

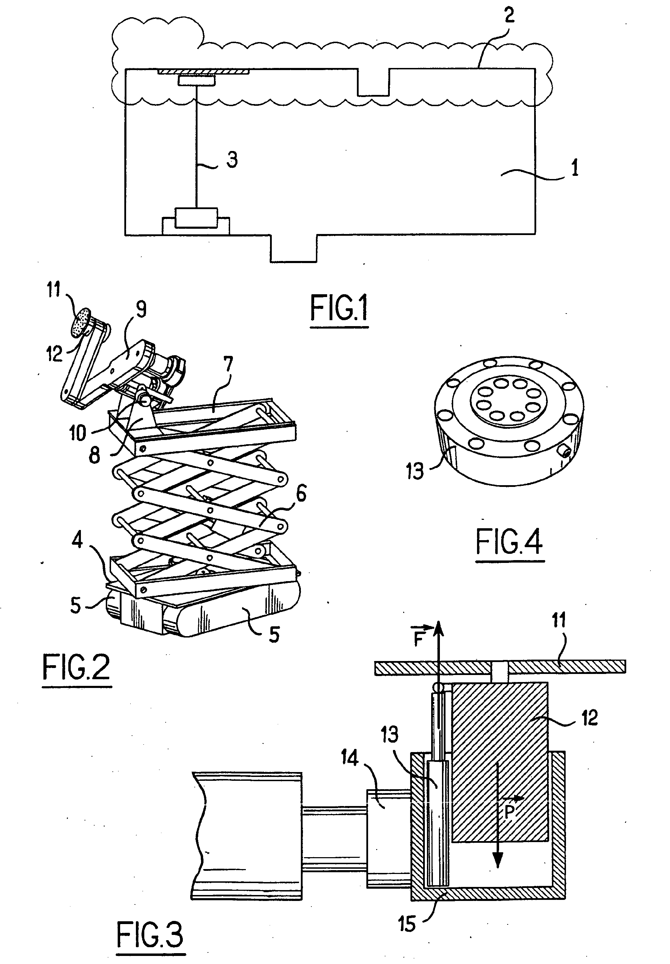

On a schématisé sur la figure 1 un local (1) qui comporte un plafond contaminé (2) que l'on désire traiter, par exemple poncer, au moyen d'un robot (3) conforme à l'invention.

Ce robot n'est que très schématisé sur la figure 1 et est représenté de façon plus détaillée sur la figure 2.

Il comprend :
- une plateforme mobile (4) à deux chenilles (5) actionnées en rotation par deux moteurs séparés (non représentés),
- un élévateur à ciseaux (6) monté sur la plateforme de façon à pouvoir se déployer verticalement sous l'action de vérins (non représentés), et à tourner sur lui-même sous la commande d'un moteur (non représenté),
- une plateforme horizontale (7) fixée au sommet de l'élévateur et sur laquelle peut se déplacer longitudinalement une chape (8) sous l'action d'un moteur par l'intermédiaire d'une vis d'entraînement,
- un bras manipulateur (9), qui en l'occurrence est de type SCARA à compliance active, monté sur la chape autour d'un axe de pivotement horizontal (10) qui permet de basculer le bras entre une position où l'axe de rotation du disque est vertical (ponçage d'un plafond) et une position où cet axe est horizontal (ponçage d'un mur) ou incliné (ponçage d'un plafond ou d'un mur incliné),
- un disque de ponçage rotatif (11) et son moteur d'entraînement (12) portés à une extrémité du bras (9). Le disque est normalement entouré d'une chambre d'aspiration (non représentée) reliée à un aspirateur (non représenté) porté par le robot.

L'effort du disque sur la surface à poncer est contrôlé (fig.3) par un vérin électrique (13) accouplé à un capteur d'effort (14).

L'élévatrice (6) ne permet en effet que de placer grossièrement l'outil de ponçage à proximité ou au contact de la surface du plafond et le vérin électrique (13) constitue un actionneur qui permet un réglage plus fin grâce au capteur d'effort (14) qui donne une information sur la pression de l'outil sur le plafond.

Des moyens sont prévus (non représentés) pour modifier l'assiette de l'outil afin de compenser un défaut éventuel de parallélisme entre le sol et le plafond.

Une extrémité du vérin est fixée au bras et l'autre extrémité du vérin est fixée au moteur d'entraînement (12) de l'outil, lequel peut se déplacer à translation dans un guide vertical (15).

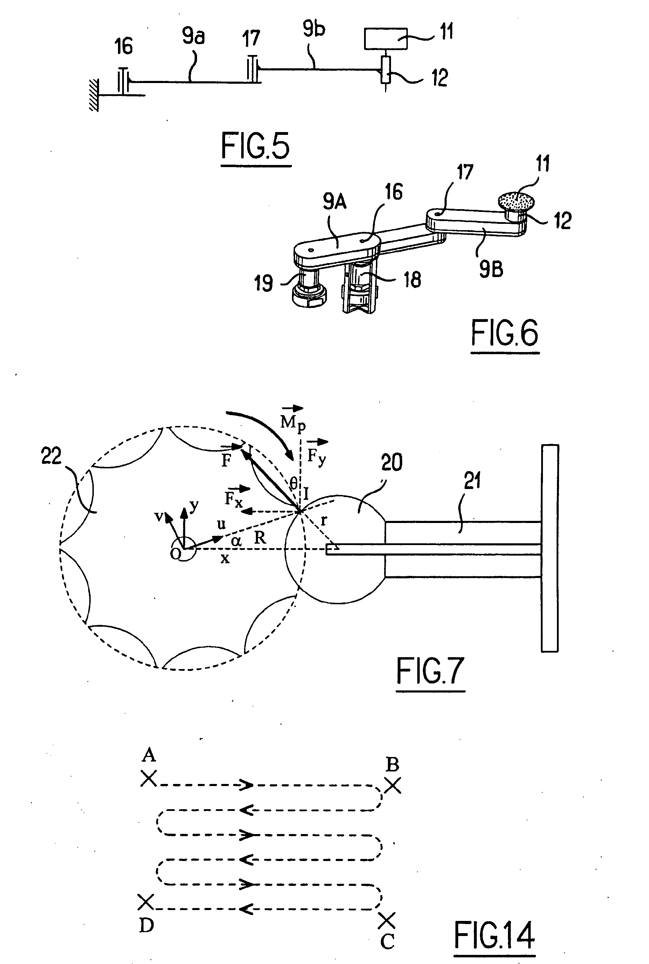

Le bras manipulateur (9) est représenté dans son principe sur la figure 5 et en perspective sur la figure 6.

Il est composé d'un bras (9a) et d'un avant-bras (9b).

Le bras (9a) est monté à rotation autour d'un axe vertical (16) et entraîné en rotation par un actionneur (18) constitué par un moteur électrique.

L'avant-bras (9b) est articulé sur le bras (9a) de façon à pouvoir pivoter autour d'un axe vertical (17) sous la commande d'un actionneur (19) porté par le bras et qui, dans l'exemple représenté, est déporté pour mieux répartir les charges et relié à l'avant-bras par une transmission.

L'actionneur est un moteur électrique.

Selon une caractéristique de cette réalisation, l'articulation de l'avant-bras sur le bras comporte un embrayage qui sert à suivre les obstacles lorsque le bras rentre en contact avec eux. Un capteur angulaire (non représenté) est prévu pour informer à tout moment sur la configuration du bras.

L'embrayage peut être passif ou actif.

Dans un exemple de réalisation représenté sur la figure 7, cet embrayage est passif et composé d'une bille (20) poussée par un ressort (21) dans un engrenage (22).

La force du ressort doit être assez importante pour que le bras conserve sa position sous l'effet de son propre poids. Les caractéristiques de ce ressort dépendront des diamètres de la bille et de l'engrenage.

Les actionneurs sont commandés par des moyens informatiques connus en soi, en fonction de la position désirée et du déplacement désiré du disque de ponçage, et des interactions désirées entre le robot et son opérateur.

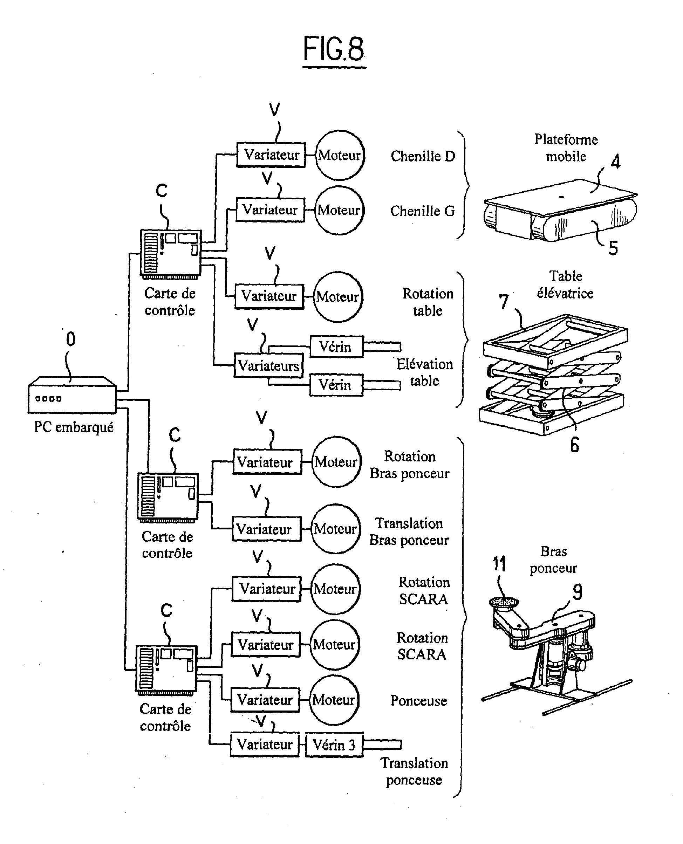

La figure 8 schématise pour l'exemple une architecture de commande, pour le contrôle notamment de l'élévateur, du bras manipulateur, ainsi que du déplacement de l'ensemble. Les capteurs n'ont pas été représentés sur cette figure : ils sont directement connectés sur les variateurs (V), sur les cartes de contrôle (C) ou sur l'ordinateur embarqué (O).

Les commandes désirées entre le robot et son opérateur peuvent être très diverses :

### • Commandes déportées ou manuelles

Dans ce niveau d'autonomie le plus faible, le robot est considéré comme un simple outil manipulé par un humain.

Ce type d'interaction consomme beaucoup de ressources de l'homme et nécessite sa connaissance technique des tâches à accomplir. La fiabilité du résultat et la performance du système sont largement guidées par la richesse du flux d'information et sa vitesse de transmission.

L'homme doit assurer à chaque instant la commande du robot et le robot doit attendre que l'opérateur lui indique les consignes.

L'ergonomie de l'interface homme/machine est un facteur clé et doit tendre à améliorer la capacité de l'opérateur à s'immerger dans l'environnement du robot et à le commander.

### • Contrôle supervisé

Il s'agit d'une décomposition par l'opérateur de la mission en une succession de tâches que le robot peut accomplir sans intervention de l'opérateur qui doit simplement surveiller le déroulement et éventuellement replanifier un nouvel enchaînement si un nouvel événement survivent.

Les commandes se font à un niveau plus élevé que dans le cas précédent. Il y a une relation forte de subordination entre le robot et l'opérateur qui conserve l'entière responsabilité des cycles de tâches, ce qui nécessite son attention concentrée.

### • Comportements commandés

Dans ce mode, au lieu de définir un enchaînement de tâches, l'opérateur définit un enchaînement de comportements face à des estimations du robot.

L'opérateur peut activer, de manière simultanée, plusieurs comportements réactifs qui peuvent éventuellement être interactifs (évitement d'obstacles et suivi de trajectoire par exemple).

L'opérateur reste responsable de l'enchaînement des comportements et de leur pertinence face à la mission globale.

### • Echange de contrôle

Dans ce mode, le robot possède la capacité à décider d'enchaîner une action suite à la perception d'un environnement.

Le robot exécute des tâches de manière autonome mais l'opérateur peut à tout moment intervenir.

Il s'agit plus d'un partenariat robot-opérateur, l'homme exerce son expertise dans les cas requis (tâches trop complexes ou situation d'échec), il peut alors reprendre la main à un niveau bas ou commander l'exécution d'une tâche de haut niveau.

La responsabilité temporaire de l'opérateur est alors totale envers le robot.

La ressource « opérateur » est optimisée et utilisée uniquement dans les cas où elle est indispensable - son recours évite une trop grande sophistication du robot mais exige de celui-ci la prise en compte des interventions humaines pour compléter sa mission.

### • Contrôle partagé

Dans ce mode, certaines fonctions sont laissées à la responsabilité du robot, l'opérateur ne commande qu'un partie des actions, il peut « échanger son contrôle » avec le robot sur quelques points sensibles, soit localement, soit temporellement, la suite de la mission pouvant être alors gérée par le robot (évitement d'obstacle laissé à la responsabilité du robot et déplacement piloté par le système et/ou par l'opérateur successivement).

Le contrôle de l'opérateur n'est exercé que sur un nombre limité de mécanismes du robot.

### • Autonomie ajustable

Dans ce mode d'interaction, le niveau d'autonomie du robot est apprécié en fonction de la situation par le robot, qui ajuste ce niveau (en fonction de l'apparition d'évènements critiques, ou de la charge de l'opérateur ou de ses compétences), permettant à l'opérateur de n'intervenir qu'au moment le plus approprié.

La mission repose dans la capacité de l'opérateur et du robot à définir leur niveau optimum de coopération.

Au fil de la mission, le contrôle du robot peut être à la charge de l'homme ou de mécanismes automatiques.

La programmation de la commande du robot tient compte du parcours du travail que l'on veut imposer à l'outil.

La figure 14 est un exemple d'un parcours programmé pour poncer une surface ABCD.

Le robot est renseigné sur les limites de cette surface, par exemple par la connaissance des coordonnées des points A,B,C,D, et programme les fonctionnements des actionneurs, selon les procédures connues de la robotique, pour que l'outil de ponçage effectue en continu un parcours adéquat pour couvrir la surface, par exemple le parcours représenté en traits interrompus sur la figure 14, l'embase roulante étant ou non à poste fixe et la profondeur de ponçage étant ou non constante au cours d'un parcours.

Si nécessaire, plusieurs passes sont réalisées pour obtenir la profondeur de ponçage voulue.

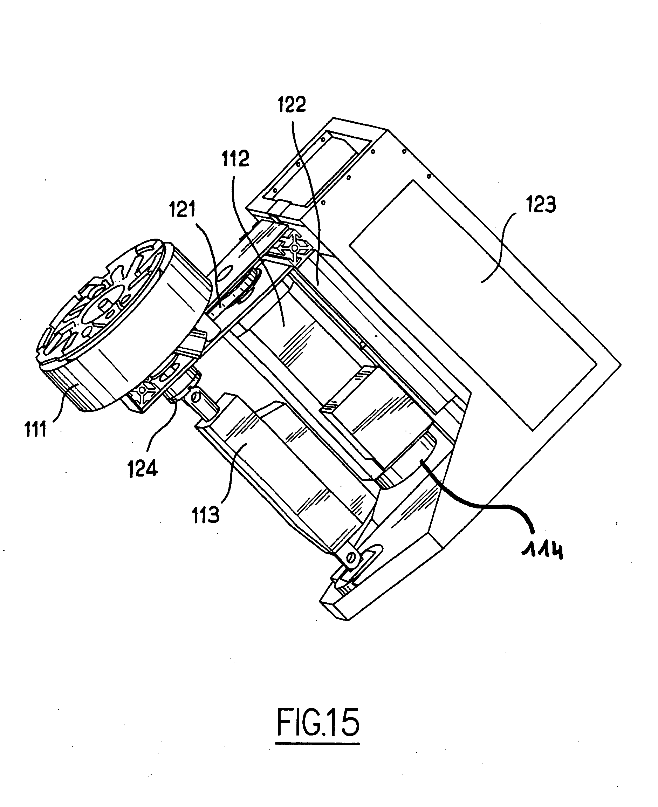

Un autre mode de réalisation encore a été illustré sur la figure 15 pour l'outil.

Dans ce mode de réalisation, un disque à poncer 111 est monté rotatif à l'extrémité de l'axe d'un vérin 113.

Ce disque 111 est entrainé par un moteur 112, dont l'axe est décalé par rapport à l'axe de rotation du disque à poncer 111, l'entraînement se faisant au moyen d'une courroie 121.

Un capteur d'effort 114 est disposé au pied du vérin 113.

Le disque 111 est déplacé en translation par le vérin 113 par l'intermédiaire de guidages 122 qui sont aptes à être déplacés par coulissement le long d'un bras qui porte l'outil (bras support 123).

Un tel outil permet de retirer la matière au niveau du plafond ou du mur traité de manière contrôlée.

La profondeur de matière enlevée est maîtrisée par contrôle de l'effort relevé par le capteur 114 et contrôle de la vitesse de déplacement le long de la paroi traitée.

En particulier, le disque à poncer 111 peut être déplacé contre la paroi (plafond ou mur) avec un effort constant et une vitesse constante, ce qui permet d'obtenir une profondeur de ponçage constante.

A cet effet, le disque à poncer 111 est appuyé contre la paroi par le vérin 113. La maîtrise de l'effort de poussée est obtenue à l'aide du capteur d'effort 114, un algorithme de contrôle en effort - géré avec les différentes commandes de la machine au niveau de cartes de contrôle et d'un calculateur embarqué - permettant de générer la commande du vérin 113 afin de garantir que l'effort résistant de la paroi soit le même quelles que soient les perturbations rencontrées.

Afin de garantir que toute la surface du disque 111 reste bien en contact avec la paroi, le système est apte à se déformer tout en tournant à 8500 tours/minute et agit comme une rotule, l'outil étant monté de façon articulée sur la tête du vérin grâce à une liaison élastique 124.

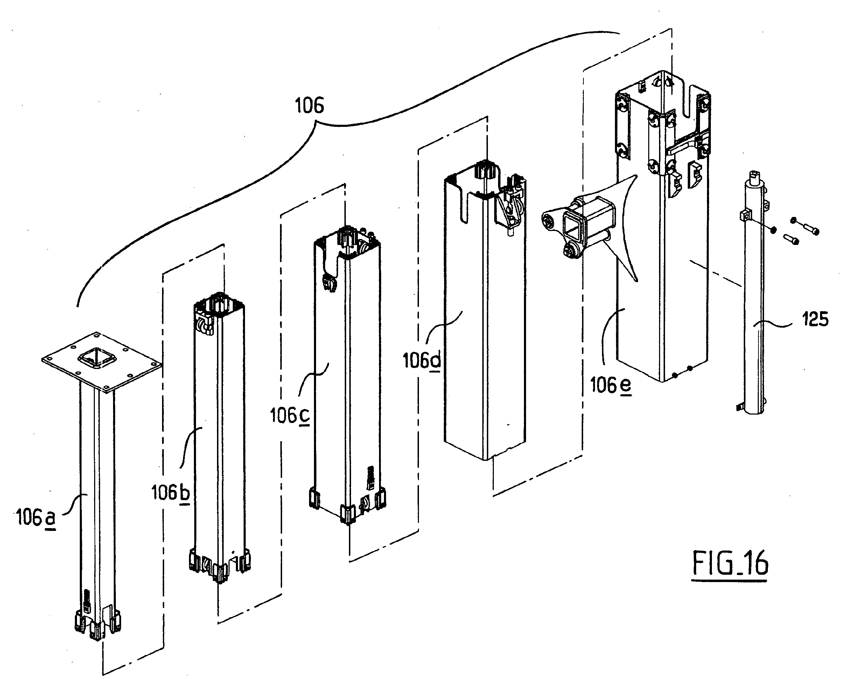

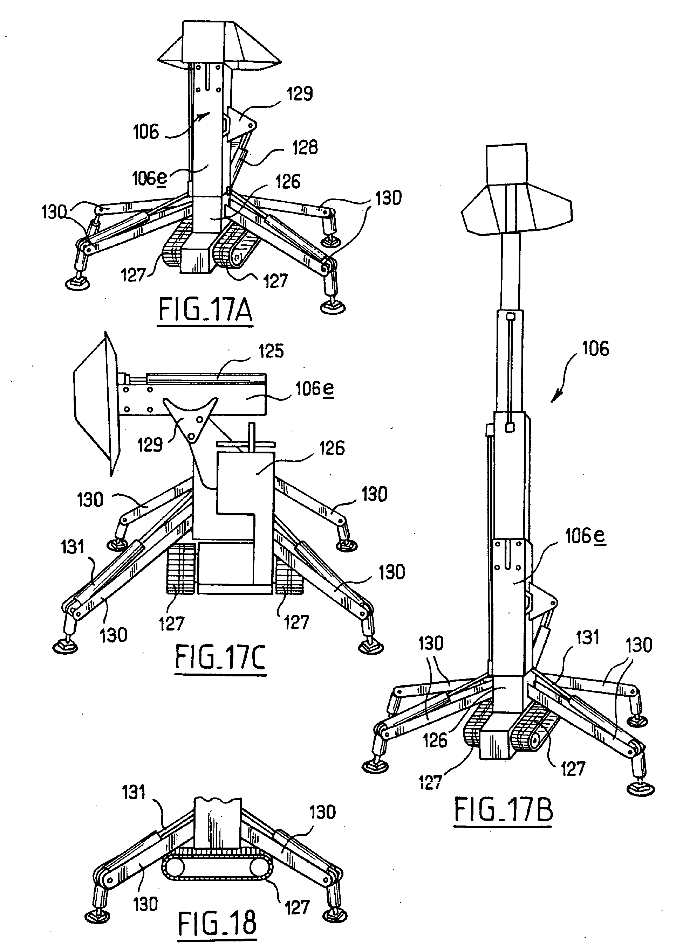

Par ailleurs, ainsi qu'illustré sur la figure 16 ainsi que sur les figures 17A à 17C, l'élévateur à ciseaux peut être remplacé par un mât télescopique 106.

Ce mât télescopique est constitué par exemple de cinq éléments tubulaires 106a à 106e, escamotables les uns dans les autres, associés à des moyens commandés 125 de type vérin qui permettent de contrôler le déploiement du mât.

Ainsi que l'on peut le voir sur les figures 17A à 17B, le mât déployable 106 est lui-même monté basculant sur une base 126. Des vérins 128 sont à cet effet articulés entre la base 126 et une ou des chapes 129 en saillie par rapport à l'élément tubulaire 106e qui constitue l'élément du mât qui est le plus proche de la base 126 et dans lequel les autres éléments tubulaires 106a à 106d s'emboitent.

Avec un telle structure, il est possible de l'incliner, voire de le basculer jusqu'à 90 degrés pour le passer d'une position verticale (figures 17A, 17B) à une position horizontale (figure 17C).

Par ailleurs, outre les chenilles 127 de déplacement, la base 126 comporte également des pieds stabilisateurs 130 susceptibles d'être déployés, grâce à des vérins 131, pour assurer la stabilisation du mât lorsque l'ensemble se trouve au droit de la zone sur laquelle l'outil doit intervenir.

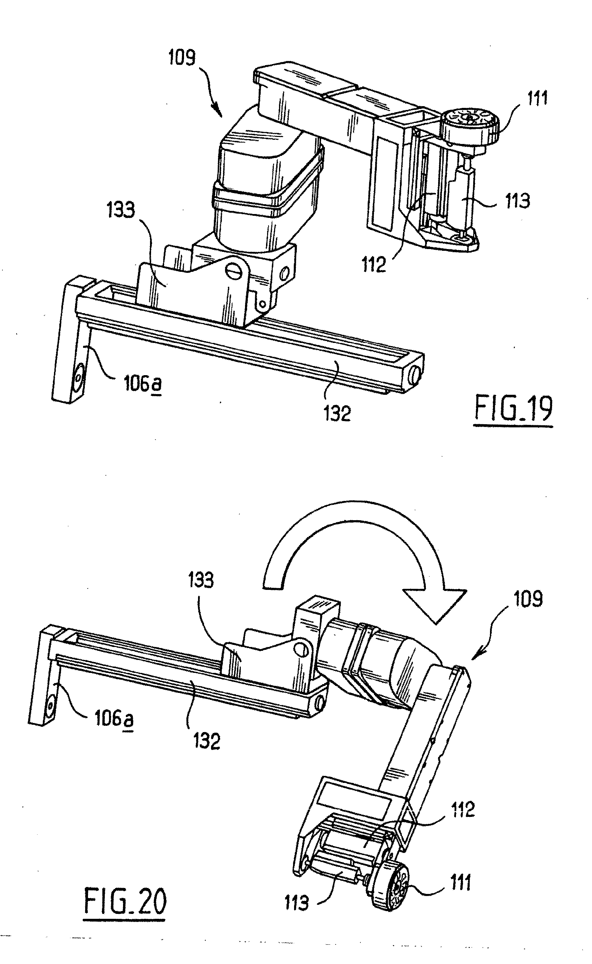

Egalement, ainsi que l'illustrent les figures 19 et 20, le bras manipulateur, en l'occurrence référencé par 109, est avantageusement monté coulissant le long d'un axe linéaire 132. La translation est assurée par un sabot 133 qui est monté sur une rainure de guidage qui est prévu à cet effet sur l'axe linéaire 132.

L'ensemble du bras 109 (en l'occurrence de type SCARA) est lui-même monté pivotant sur ledit sabot coulissant 133, ce qui permet par exemple à l'outil 111 de passer d'une position du type de celle illustrée sur la figure 19 à une position tournée à 90° du type de celle illustrée sur la figure 20.

## Revendications

1. Dispositif pour le traitement d'une surface telle qu'un plafond ou un mur, le dispositif comprenant un bras (9) à une extrémité duquel est porté un outil (11),
- le bras étant porté par un support qui comprend une embase mobile (4),
- le bras (9) étant un bras manipulateur articulé,
- le support comportant un élévateur (6) déployable qui repose sur l'embase mobile,
- l'outil étant monté sur un vérin (13) accouplé à un capteur d'effort (14),
- des moyens de commande étant prévus pour commander le déploiement de l'élévateur et le fonctionnement du bras afin d'amener l'outil en position, ainsi que pour commander le vérin afin de contrôler l'effort d'application de l'outil sur la surface à traiter.

2. Dispositif selon la revendication 1, **caractérisé en ce que** les moyens de commande contrôlent en outre la vitesse de déplacement de l'outil le long de la surface à traiter.

3. Dispositif selon la revendication 2, **caractérisé en ce que** l'outil est un disque à poncer et **en ce que** les moyens de commande agissent sur le vérin pour maintenir constant l'effort d'application dudit disque à poncer sur la surface à traiter, tandis que la vitesse de déplacement dudit disque à poncer le long de la surface est maintenue constante.

4. Dispositif selon l'une des revendications 1 à 3, **caractérisé en ce que** le vérin est apte à déplacer le disque parallèlement à son axe de rotation.

5. Dispositif selon la revendication 1, **caractérisé en ce que** le bras est un bras SCARA compliant.

6. Dispositif selon la revendication 1 dont le bras manipulateur (9) comprend un premier bras qui peut pivoter autour d'un axe (16) et un avant-bras (9b) qui peut pivoter sur le premier bras (9a) autour d'un axe (17) et qui porte à son extrémité libre l'outil de ponçage (11), ces deux axes de pivotement (16,17) étant parallèles, et des actionneurs électriques (18,19) étant prévus pour provoquer les rotations du bras et de l'avant-bras.

7. Dispositif selon la revendication 6 et dont l'articulation de l'avant-bras (9b) sur le bras (9a) comprend un embrayage.

8. Dispositif selon l'une des revendications 1 à 7 et qui comporte des moyens pour corriger l'orientation de l'outil afin de compenser un défaut éventuel de parallélisme entre le sol et le plafond.

9. Dispositif selon la revendication 1 à 8 dont le bras manipulateur est monté à translation selon un axe horizontal sur une plateforme (7) fixée à la partie supérieure de l'élévateur.

10. Dispositif selon la revendication 9 dans lequel ladite translation est provoquée par un système à vis et à billes entraîné par un actionneur électrique.

11. Dispositif selon la revendication 9 ou 10 dont le bras manipulateur est monté à pivotement sur la plateforme autour d'un axe horizontal (10).

12. Dispositif selon l'une des revendications 1 à 11 dont l'élévateur (6) est monté sur l'embase de façon à pouvoir être pivoté sur lui-même autour d'un axe vertical (10).

13. Dispositif selon l'une des revendications 1 à 12 dont l'élévateur comprend un mât télescopique ou une élévatrice à ciseaux (6).

14. Dispositif selon l'une des revendications 1 à 12 dont l'embase roulante est montée sur roues ou sur chenilles (5).

15. Dispositif selon l'une des revendications 1 à 14 dont l'outil est une buse de grenaillage qui projette la grenaille selon un axe de projection parallèle aux axes de pivotement (16,17) du bras et de l'avant-bras.

16. Dispositif selon l'une des revendications 1 à 14 dont l'outil est un disque rotatif (11) entraîné par un moteur (12) dans lequel l'axe de rotation du disque de ponçage est parallèle aux axes de pivotement du bras et de l'avant-bras.

17. Application d'un dispositif selon l'une des revendications 1 à 16 au ponçage d'un plafond, d'un mur ou d'une jonction mur/plafond.

## Claims

1. Device for treating a surface such as a ceiling or a wall, the device comprising an arm (9) at the end of which is carried a tool (11), the arm being carried by a support which includes a moveable socket (4),
- the arm (9) being an articulated manipulator arm,
- the support comprising an extendable elevator (6) that rests on the moveable socket,
- the tool being mounted on a cylinder (13) coupled two a force sensor (14),
- means of control being provided for controlling the extension of the elevator and the operation of the arm in order to bring the tool into position, as well as to control the cylinder in order to control the application force of the tool on the surface to be treated.

2. Device according to claim 1, **characterised in that** the means for controlling furthermore control the displacement speed of the tool along the surface to be treated.

3. Device according to claim 2, **characterised in that** the tool is a sanding disc and **in that** the means
for controlling act son the cylinder in order to maintain constant the application force of said sanding disc on the surface to be treated, while the displacement speed of said sanding disc along the surface is maintained constant.

4. Device according to one of claims 1 to 3, **characterised in that** the cylinder is able two displace the disc parallel to its axis of rotation.

5. Device according to claim 1, **characterised in that** the arm is a compliant SCARA arm.

6. Device according to claim 1 of which the manipulator arm (9) comprises a first arm which can pivot around an axis (16) and a forearm (9b) which can pivot on the first arm (9a) around an axis (17) and which carries at its free and the sanding tool (11), these two pivoting axes (16, 17) being parallel, and electric actuators (18, 19) being provided to provoke the rotations of the arm and of the forearm.

7. Device according to claim 6 and of which the articulation of the forearm (9b) on the arm (9a) comprises a clutch.

8. Device according to one of claims 1 to 7 and which comprises means for correcting the orientation of the tool in order to offset any non-parallelism between the floor and the coiling.

9. Device according to claim 1 to 8 of which the manipulator arm is mounted in translation according to a horizontal axis on a platform (7) fixed to the upper portion of the elevator.

10. Device according to claim 9 wherein said translation is provoked by a ball and screw system driven by an electrical actuator.

11. Device according to claim 9 or 10 of which the manipulator arm is mounted pivotingly on the platform around a horizontal axis (10).

12. Device according to one of claims 1 to 11 of which the elevator (6) is mounted on the socket in such a way as to be able to be pivoted on itself aground a vertical axis (10).

13. Device according to one of claims 1 to 12 of which the elevator comprises a telescopic mast or a scissor lift (6).

14. Device according to one of claims 1 to 12 of which the lolling socket is mounted on wheels or on caterpillar tracks (5).

15. Device according to one of claims 1 to 14 of which the tool is a shot blasting nozzle that projects shot according to a projection axis parallel to the pivoting axes (16, 17) of the arm and of the forearm.

16. Device according to one of claims 1 to 14 of which the tool is a rotating disc (11) driven by a motor (12) wherein the axis of rotation of the sanding disc is parallel to the pivoting axes of the arm and of the forearm.

17. Application of a device according to one of claims 1 to 16 to the sanding of a ceiling, a wall or the junction between a wall and a coiling.

## Patentansprüche

1. Vorrichtung zur Behandlung einer Oberfläche, wie zum Beispiel einer Decke oder einer Mauer, wobei die Vorrichtung einen Arm (9) umfasst, an dessen einem Ende ein Werkzeug (11) getragen wird,
- wobei der Arm von einem Träger getragen wird, der ein bewegliches Unterteil (4) umfasst.
- wobei der Arm (9) ein Gelenkmanipulatorarm ist,
- wobei der Träger eine ausfahrbare Hebevorrichtung (6) umfasst, die auf dem beweglichen Unterteil ruht,
- wobei das Werkzeug auf einem Zylinder (13) montiert ist, der an einen Beanspruchungssensor (14) gekoppelt ist,
- wobei Steuermittel vorgesehen sind, um das Ausfahren der Hebevorrichtung und den Betrieb des Arms zu steuern, um das Werkzeug in Position zu bringen, sowie um den Zylinder zu steuern, um die Anwendungsbeanspruchung des Werkzeugs auf der zu behandelnden Oberfläche zu überprüfen.

2. Vorrichtung gemäß Anspruch 1, **dadurch gekennzeichnet, dass** die Steuermittel außerdem die Bewegungsgeschwindigkeit des Werkzeugs entlang der zu behandelnden Oberfläche überprüfen.

3. Vorrichtung gemäß Anspruch 2, **dadurch gekennzeichnet, dass** das Werkzeug eine Schleifscheibe ist und dass die Steuermittel auf den Zylinder wirken, um die Anwendungsbeanspruchung der Schleifscheibe auf der zu behandelnden Oberfläche konstant zu halten, während die Bewegungsgeschwindigkeit der Schleifscheibe entlang der Oberfläche konstant gehalten wird.

4. Vorrichtung gemäß einem der Ansprüche 1 bis 3, **dadurch gekennzeichnet, dass** der Zylinder ausgelegt ist, die Scheibe parallel zu ihrer Rotationsachse zu bewegen.

5. Vorrichtung gemäß Anspruch 1, **dadurch gekennzeichnet, dass** der Arm ein SCARA entsprechender Arm ist.

6. Vorrichtung gemäß Anspruch 1, deren Manipulationsarm (9) einen ersten Arm umfasst, der sich um eine Achse (16) drehen kann und einen Unterarm (9b), der sich auf dem ersten Arm (9a) um eine Achse (17) drehen kann und der an seinem freien Ende das Schleifwerkzeug (11) trägt, wobei diese beiden Drehachsen (16, 17) parallel sind und elektrische Stellglieder (18, 19) vorgesehen sind, um die Rotationen des Arms und Unterarms hervorzurufen.

7. Vorrichtung gemäß Anspruch 6 und deren Gelenkverbindung des Unterarms (9b) auf dem Arm (9a) eine Kupplung umfasst.

8. Vorrichtung gemäß einem der Ansprüche 1 bis 7 und die Mittel umfasst, um die Orientierung des Werkzeugs zu korrigierten, um einen mögliche Mangel an Parallelität wischen dem Boden und der Decke auszugleichen.

9. Vorrichtung gemäß dem Anspruch 1 bis 8, deren Manipulatorarm verschiebbar entlang einer horizontalen Achse auf einer Plattform (7) gelagert ist, die am oberen Teil der Hebevorrichtung befestigt ist.

10. Vorrichtung gemäß dem Anspruch 9, bei der die Verschiebung von einem Kugelgewindetriebsystem hervorgerufen wird, das von einem elektrischen Stellglied angetrieben wird.

11. Vorrichtung gemäß Anspruch 9 oder 10, deren Manipulatorarm drehbar auf der Plattform um eine horizontale Achse (10) gelagert ist.

12. Vorrichtung gemäß einem der Ansprüche 1 bis 11, deren Hebevorrichtung (6) auf dem Unterteil gelagert ist, um um sich selbst um eine vertikale Achse (10) gedreht werden zu können.

13. Vorrichtung gemäß einem der Ansprüche 1 bis 12, deren Hebevorrichtung einen Teleskopmasten oder einen Scherenhubtisch (6) umfasst.

14. Vorrichtung gemäß einem der Ansprüche 1 bis 12, deren rollendes Unterteil auf Rädern oder auf Raupen (5) montiert ist.

15. Vorrichtung gemäß einem der Ansprüche 1 bis 14, deren Werkzeug eine Schrotstrahldüse ist, die das Schrot entlang einer zu den Drehachsen (16, 17) des Arms und des Unterarms parallelen Schleuderachse herausschleudert.

16. Vorrichtung gemäß einem der Ansprüche 1 bis 14, deren Werkzeug eine Drehscheibe (11) ist, die von einem Motor (12) angetrieben wird, bei der die Rotationsachse der Schleifscheibe parallel zu den Drehachsen des Arms und des Unterarms ist.

17. Verwerdung einer Vorrichtung gemäß einem der Ansprüche 1 bis 16 zum Schleifen einer Decke, einer Mauer oder einer Mauer/Decke-Verbindungsstelle.
